Europäisches Patentamt

European Patent Office

Office européen des brevets

(19)

(11) Publication number: **0 133 214**
**A1**

(12) # EUROPEAN PATENT APPLICATION

(21) Application number: **84107444.6**

(22) Date of filing: **27.06.84**

(51) Int. Cl.⁴: **C 08 F 10/00, C 08 F 4/64**

(30) Priority: **13.07.83 US 513531**

(71) Applicant: **CONOCO INC., 1000 South Pine Street P.O. Box 1267, Ponca City Oklahoma 74601 (US)**

(72) Inventor: **Berge, Charles Thomas, 2312 Drake Lane, Ponca City, OK 74601 (US)**
Inventor: **Baxter, Steven Lynn, 1608 Dean, Ponca City, OK 74601 (US)**

(43) Date of publication of application: **20.02.85 Bulletin 85/8**

(74) Representative: **Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 58, D-8000 München 22 (DE)**

(84) Designated Contracting States: **BE DE FR GB NL SE**

(54) **Non-crystalline poly-alpha-olefin catalyst and method.**

(57) A process is provided for the preparation of non-crystalline, hydrocarbon soluble ultra-high molecular weight drag reducing polymers comprising preparing a transition metal catalyst slurry containing crystalline titanium halide, a hydrocarbon diluent and an ether, then contacting the transition metal catalyst slurry with an alkylating agent having at least one available alkyl group, alkylate the transition metal catalyst slurry, before polymerizing alpha monoolefinic hydrocarbons at a temperature of 40°F or less.

PERCENT DRAG REDUCER VS STARTING TEMP. OF POLYMERIZATION 3.24 ppm POLYMER

ETHER SLURRY CATALYST

PREALKYLATED CATALYST

STARTING TEMPERATURE, °F

EP 0 133 214 A1

ACTORUM AG

# NON-CRYSTALLINE POLY-ALPHA-OLEFIN CATALYST AND METHOD

This invention relates to a method for preparing high molecular weight non-crystalline polymers suitable for use as drag reducing substances. More specifically, this invention relates to an improved method for preparing such materials by providing a transition metal catalyst which is activated so as to allow the use of lower concentrations of catalysts at lower polymerization temperatures in order to increase molecular weight and thereby improve the drag reduction efficiency of such polymers.

The instant invention describes a method of improving catalyst activity at temperatures below about 40°F and the drag reduction performance characteristics of the resultant non-crystalline hydrocarbon polymers.

It is well known that alpha olefins can be polymerized in the presence of catalysts generally referred to as Ziegler/Natta catalysts. These catalysts generally consist of materials such as a transition metal halide, as represented by titanium trihalide, and organometallic cocatalysts such as aluminum alkyls or aluminum alkyl halides. Much art exists concerning modified Ziegler/Natta catalysts which improve polymerization rates by developing more efficient catalysts or promoters for the production of highly crystalline alphaolefin polymers. Generally, efforts to improve polymerization rates using Ziegler/Natta catalysts have been designed to maximize catalyst activity and to control polymer stereospecificity. U.S. Patent 3,476,730 discloses numerous organic additives proposed for the preparation of such polymers. U.S. Patent 3,116,274 teaches a catalyst comprising an aluminum alkyl, a titanium halide and an ether compound. The use of halogen-free alkyls of the co-catalyst for the propylene polymerization process and a cyclic ether such as 1,4-dioxane are used as suitable catalyst promoters.

0133214

U.S. Patent 3,318,859 discloses a process for the stereospecific polymerization of propylene using catalysts prepared from monoalkylaluminum halides, violet titanium trichlorides and ether and deals with the preparation of isotactic highly crystalline polypropylene. U.S. Patent 3,206,533 prepares synthetic lubricants by polymerizing alpha olefins in the presence of aluminum alkyl sesquichloride, titanium tetrachloride and oxygen containing organic components such as oxirane or methyl alkyl ethers at temperatures of from 0 to 50°C. U.S. Patent 3,156,681 discloses an improved process for olefin polymerization by using an unsaturated ether compound as a catalyst promoter. U.S. Patent 3,663,450 teaches contacting a Lewis base with a titanium halide complex wherein the Lewis base contains hetero atoms such as oxygen. The complex is soluble in aromatic hydrocarbons and utilizes a stoichiometric excess of Lewis acids.

These prior art teachings are directed toward obtaining crystalline materials suitable for producing formed objects. None teach or suggest the method for obtaining an ultra high molecular weight polymer which is non-crystalline and has properties suitable for use as a drag reducing material.

Non-crystalline polymers of high molecular weight which are suitable drag reducing materials are disclosed in U.S. Patent 3,692,676 and 4,358,572, both hereby incorporated by reference into the instant specification.

U.S. Patent 3,692,676 reveals a method of reducing friction loss or drag for pumpable fluids through pipelines by adding a minor amount of a very high molecular weight polymer. U.S. Patent 4,358,572 in general teaches a method for preparing drag reducing polymers by utilizing transition metal catalyst slurries which are ether activated and which utilize an alkylating co-catalyst. The reference teaches that it is necessary that polymerization be concluded at the polymer content of 20% by weight or less in order to obtain the most efficient material.

This incorporated art, as well as the present invention, relates to such drag reducing materials and also relates to the use of these materials as antimist agents, fuel efficiency agents, lubricant components and tackifiers. The polymers produced by the method of the present invention are especially well suited for fluids being transported through pipelines. Alpha olefins useful in the process of the present invention contain from about 2 to about 30 carbon atoms, are not suitable to form molded objects which exhibit stiffness, and are hydrocarbon soluble. The present invention provides an improved catalyst and method for the preparation of ultra high molecular weight non-crystalline polymers, copolymer and terpolymers which are hydrocarbon soluble. Ethylene and propylene are operable and included in the definition of alpha olefins for the purposes of the present invention.

As in the prior art, preparation of ultra high molecular weight non-crystalline materials as produced by the present invention has encountered problems, one of which is an extremely long reaction time necessary in order to obtain a useable product. The ultrahigh molecular weight non-crystalline hydrocarbon soluble polymer is necessarily produced at low temperatures resulting in long batch times and low catalytic activities. U.S. Patent 4,358,572 provided an improved method for producing these materials by ceasing polymerization at a polymer content of 20% by weight or less based on total reactor content and provided a catalyst which allows the production of high molecular weight materials at temperatures of from about -25°C to about 100°C. However, for practical polymerization rates to be utilized, such polymerizations were normally carried out at a temperature as high as possible while obtaining a useful drag reducing material.

It would therefore be of great benefit to provide a method for the production of such materials at higher rates and lower temperatures in order to provide higher molecular weight, non-crystalline, hydrocarbon soluble drag reducing polymers.

We have now discovered an improved method for preparing non-crystalline high molecular weight drag reducing polymers which comprises the sequential steps

a) preparing a transition metal catalyst slurry containing

1) crystalline titanium halide having the general formula TiXn wherein n is from 2.5 to 3.0 and X is a halogen,

2) a hydrocarbon diluent, and

3) an ether wherein the molar ratio of ether to titanium ranges from about .5 ether to about 1 titanium to about 10 ethers to about 1 titanium, then

b) contacting the transition metal catalyst slurry with an alkylating agent having at least 1 available alkyl group, said alkyl group containing from 1 to 20 carbon atoms, at a molar ratio of alkylating agent to ether of at least .6 and a molar ratio of active alkylating groups to titanium no greater than the molar ratio of ether to titanium plus 2.0, for a time and at a temperature sufficient to activate the transition metal catalyst slurry, then

c) placing the activated transition metal catalyst slurry in contact with alpha olefinic hydrocarbons containing from about 2 to about 30 carbon atoms at a temperature of 40°F or less to polymerize the olefins and form the non-crystalline hydrocarbon soluble ultrahigh molecular weight polymer.

With the improved method of the present invention, a smaller amount of catalyst is present in the reaction, thus providing higher molecular weight product. We have discovered that more higher molecular weight polymer is formed at lower temperatures and therefore the reaction is desirably carried out at as low a temperature as possible.

However, the catalysts of the prior art have had a "induction period" at lower temperatures and are not effective until temperature of the reaction generally increases to between 30 and 40°F, even though the starting temperature may be lower. This is essentially non-productive wasted time. The method of the present invention fulfills the objectives of obtaining reaction at the lowest temperature possible while utilizing less catalyst to get the highest molecular weight. In addition, the prior art limitation of 20% polymer content or less, while preferably followed in the process of the present invention, is not critical to obtain an effective high molecular weight hydrocarbon soluble drag reducing polymer. Thus a large decrease in overall reaction time is possible using the catalyst and the method of the present invention. The reaction rate, which currently is dependent upon reaction temperature, is faster or more efficient at lower temperatures in the present invention, thus reducing total batch time and increasing plant capacity, as well as producing higher molecular weight polymers which provide increased drag reducing capability. The polymerizations can be carried out more rapidly at lower temperatures, below about 40°F, in order to maximize molecular weight and drag reduction. Catalysts prepared according to the present invention allow the production of high molecular weight polymer at temperatures which were not commercially practical in the prior art.

We have found that contacting the ether slurried catalysts with an alkylating species provides an unexpected activation of the catalyst for polymerizations carried out at lower temperatures. The ratio of titanium to alkylating agent in the prealkylation step is critical in that an optimum ratio must be observed. Content of alkylating agent above or below such optimum ratio does not permit efficient polymerization at low temperatures or the production of higher molecular weight polymer at higher polymerization temperatures. Further, the type of alkylating co-catalyst is not as important as the ratio of alkyl groups able to alkylate or reduce titanium halides to titanium. This result is surprising in view of the teaching of U.S. Patent 4,356,572 which states that it is preferred to contact the cocatalyst in the reactor in the presence of olefins rather than prior to introduction into the polymerization zone, since it was surprisingly found that reactor contact provided superior activity and performance for the catalyst as compared to combination prior to introduction.

The catalyst slurry of the present invention comprises a crystalline titanium halide material, a hydrocarbon diluent in a complexing ether agent as well as an alkylating species. Preferably, the catalyst is titanium trichloride which is aluminum reduced and activated. Examples of such materials are sold by the Stauffer Chemical Company as $TICl_3 \cdot AA$ type 1.1 (aluminum reduced and activated, having the formula $TiCl_3 \cdot 1/3 \ (AlCl_3)$). However, crystalline violet titanium trichloride and titanium catalysts of the formula $TiCl_3 \cdot MAlCl_3$ (M= 0 to 1.0) can generally be used.

In this specification and claims, an active alkylating agent is an alkyl group of an organometallic reagent that is mobile, i.e., can readily be transferred to the transiation metal to produce an active polymerization catalyst. All alkyl moieties of the organometallic reagent are not transferred to the transition metal to produce an active catalyst. The ability of the alkyl group to transfer to the transition metal is dependent upon the metal atom and the ligands associated with the organometallic compound. For example, in the instant invention triethylaluminum has two active alkylating groups, diethylaluminum chloride has one active alkylating groups, and ethylaluminum dichloride has no active alkylating groups.

Representative but non-exhaustive examples of
active alkylating agents are

$H_2Mg$                    $HMgCl$

$(CH_3)_2Mg$            $HMgBr$

$(C_2H_5)_2Mg$          $CH_3MgCl$

$(sec-C_4H_9)_2Mg$     $CH_3MgBr$

$(\underline{n}-C_5H_{11})_2Mg$       $(C_2H_5)MgCl$

$(\underline{n}-C_6H_{13})_2Mg$       $(\underline{sec}-C_4H_9)MgBr$

$(\underline{n}-C_{12}H_{25})_2Mg$     $(\underline{n}-C_5H_{11})MgCl$

$CH_3MgH$               $(\underline{n}-C_6H_{13})MgBr$

$C_2H_5MgH$             $(\underline{i}-C_3H_7)MgCl$

$\underline{i}-C_3H_7MgH$         $(\underline{cyclo}-C_5H_{11})MgI$

                         $(\underline{n}-C_3H_7)MgCl$

$\underline{cyclo}-C_5H_{11}MgH$

$C_6H_5MgH$            $ZnEt_2$

$\underline{n}-C_4H_9MgH$        $BeEt_3$

$(\underline{n}-C_4H_9)Mg(C_2H_5)$    $BEt_3$

$(\underline{n}-C_4H_9)Mg(\underline{sec}-C_4H_9)$    $\underline{n}-C_4H_9Li$

$(\underline{n}-C_4H_9)_2Mg \cdot (C_2H_5)_3Al$    $\underline{sec}-C_4H_9Li$

$(\underline{n}-C_4H_9)_2Mg \cdot 0.13(C_2H_5)_3Al$    $\underline{tert}-C_4H_9Li$

$(\underline{n}-C_3H_7)_2Mg \cdot (C_2H_5)_3Al$    $CH_3Li$

$(\underline{n}-C_6H_{13})_2Mg \cdot 0.02 \ (C_2H_5)_3Al$    $C_6H_5Li$

$(\underline{n}-C_6H_{13})_2Mg \cdot 0.05 \ (C_2H_5)_2O$    $(CH_2)_2Li_2$

$(\underline{n}-C_6H_{13})_2Mg \cdot 0.05 \ Al(O-\underline{i}-C_3H_6)_3$

$(\underline{n}-C_4H_9)Mg(C_2H_5) \cdot 0.05 \ (C_2H_5)_2O$

$(\underline{n}-C_4H_9)Mg(C_2H_5) \cdot 0.05 \ Al(O-\underline{i}-C_3H_7)_3$

Preferred alkylating agents useful in the present invention are aluminum alkyl compounds or alkyl aluminum halide compounds. Representative but non-exhaustive examples of such materials are trimethylaluminum, triethylaluminum, tri-n-propylaluminum, tri-n-butylaluminum, triisobutylaluminum, tri-n-hexylaluminum, tri-(2-methylpentyl)aluminum, tri-n-octylaluminum, diethylaluminum hydride, diisobutylaluminum hydride, diisopropylaluminum chloride, dimethylaluminum chloride, diethylaluminum chloride, diethylaluminum bromide, diethylaluminum iodide, di-n-propylaluminum chloride, di-n-butylaluminum chloride, diisobutylaluminum chloride, or mixtures of these.

Generally the catalyst of the instant invention is prepared as a catalyst slurry which comprises the titanium component and a hydrocarbon diluent. The hydrocarbon diluents are inactive with respect to polymerization and are hydrocarbon solvents. Examples of such materials are straight chain aliphatic compounds or branched hydrocarbons such as ethane, propane, butane, pentane, hexane, heptane or octane. Also suitable are alicyclic hydrocarbons such as cyclohexane, methylcyclopentane and tetralin. Aromatic hydrocarbons can also be used as represented by benzene, toluene, and xylene. Mixtures and analogues of these compounds can be used such as Molex (trademark of Universal Oil Products) raffinate, which is a complex mixture of aliphatic, cyclic aliphatic, aromatic and trace amounts (2-3%) of unbranched aliphatic hydrocarbons. The hydrocarbon diluent can also contain a portion of an alphaolefin.

Ether compounds are selected from alkyl ethers wherein ether oxygen is attached directly to two aliphatic groups and may have aromatic substituents; aryl ethers wherein the ether oxygen is attached directly to two aromatic groups; aryl-alkyl ethers wherein the ether oxygen is attached directly to one aliphatic and one aromatic group, and cyclic ethers wherein the ether oxygen is an intregal part of a ring structure. The ether can therefore contain alkyl, aryl, aryl alkyl, or alkyl aryl groups each containing from 1 to 30 carbon atoms and cycloalkyl ethers containing from 2 to 30 carbon atoms.

Representative but non-exhaustive examples of alkyl ethers are benzyl ether, tert-butyl methyl ether, di-n-butyl ether, diisopropylether, and di-n-propyl ether. Representative examples of cyclic ethers are cyclododecene oxide, cyclohexene oxide, cyclooctene oxide, cyclopentene oxide, dibenzofuran, dihydropyran, furan, 2-methylfuran, 5-methylfuran, 2-methyltetrahydrofuran, 3-methyltetrahydrofuran, styrene oxide and tetrahydrofuran. Representative examples of aryl ethers are m-phenoxytoluene and phenyl ether. Representative examples of aryl-alkyl ethers are anisole, butyl phenyl ether, m-dimethoxybenzene, p-dimethoxybenzene, 2,6-dimethoxytoluene, 1-methoxynaphthalene and 2-methoxy-naphthalene.

Carrying out the process of the present invention, the polymerization will normally take place at temperatures of 40°F or less, although preferably the polymerization temperature will be 20°F or less. The method of the present invention allows higher reaction rates at lower temperatures, or alternatively, the use of less catalyst at higher temperatures, in order to achieve higher molecular weight polymer. However used, the reaction is normally carried out under an inert atmosphere such as dry nitrogen or dry argon to prevent degradation of the catalyst components.

The ether component of the present invention activates the titanium catalysts and generates a more effective drag reducer. However, it is necessary that the ethertitanium halide slurry be contacted with an alkylating agent prior to its contact with alpha olefinic hydrocarbons in order to obtain the benefits of the present invention. The amount of alkylating agent is critical when a mole ratio of active alkylating agents to ether of at least .6 is present and when the molar ratio of alkylating agent to titanium is no greater than the molar ratio of ether to titanium plus 2.0. These materials are brought into contact for a time and at a temperature sufficient to activate the transition metal catalyst slurry. This contact time can range up to about 60 minutes but must be carried out under an inert atmosphere and with sufficient agitation to ensure complete contact of all reactants with subsequent activation.

The ether activated titanium component having been contacted with the alkylating agent is then charged into a polymerization zone wherein it is contacted with olefin in an optional inert hydrocarbon diluent. Also optional are additional alkylating agents such as organometallic cocatalysts. With these conditions very rapid reaction occurs at low temperatures to provide a very high molecular weight non-crystalline hydrocarbon soluble drag reducing material.

The present invention is more concretely described with reference to the examples below wherein all parts and percentages are by weight unless otherwise specified. The examples are provided to illustrate the present invention and not to limit it. While the present invention is depicted and exemplified as a batch reaction, those skilled in the art will recognize that the invention described is extremely well suited for continuous operations.

General Procedure

In the examples which follow, the solid catalyst $TiCl_3 \cdot 1/3 \; AlCl_3$ is prepared by aluminum reduction of titanium tetrachloride and then mechanically activated. This catalyst is placed in an inert hydrocarbon to form a slurry when agitated. A quantity of n-butylether is placed in contact with the slurried catalyst for a sufficient duration to activate the slurry after which alkylating agent is added. The addition of alkylating agent proceeds over a period of time which ensures that the heat of reaction is removed while avoiding the loss of solvent. The pre-alkylated slurry catalyst is agitated on additional periods of time after complete addition of the alkylating agent. Sufficient time is required for the organometallic agent to react with the ether _and_ the catalyst. The agitation just suspends the catalyst in the diluent to ensure thorough contact of catalyst with alkylating agent. The reaction is fast but some additional time is required to ensure completion. The catalyst is then placed in the polymerization zone containing olefin diluent and additional optional cocatalyst to initiate the reaction.

Polymerization Procedure

Polymerizations are carried out by placing dry, oxygen-free olefin and solvent into reaction vessels which have been thoroughly purged of oxygen using an inert gas such as nitrogen. The polymerization charge is brought to the desired initiation temperature while maintaining a positive nitrogen pressure. Optionally, a portion of the aluminum reagent is added to the polymerization zone. The catalyst slurry is then placed into the polymerization zone to initiate polymerization, while all reactants are agitated to maintain a suspended catalyst. When the polymerization has proceeded to the desired conversion level, the catalyst is deactivated to terminate the polymerization and produce the final drag reducing material.

Example 1

Using Molex raffinate (trademark of Universal Oil Products - UOP) as a solvent and a 10 carbon atom alpha olefin which had been dried over molecular sieves and thoroughly sparged with nitrogen, polymerizations were carried out.

Control Polymerizations Reagents used were based on the following mole ratios:  olefin/titanium = 342

_n_-butylether/titanium = 0.56 diethylaluminum chloride/titanium = 3.36.

The solvent and olefin were chilled to below 30°F while the total amount of the co-catalyst DEAC was placed into the reactor. Solvent, olefin and DEAC were stirred while the catalyst was prepared in a dry box. The solid catalyst was slurried in approximately 3 milliliters (ml) Molex raffinate for 45 minutes with sufficient n-butylether to achieve the proper mole ratio. The ether slurried catalyst was removed from the dry box and injected into the polymerization reactor. The reaction rate was monitored from the initiation of the polymerization to its termination. Initiation temperature, weight percent polymer and drag reduction data are shown in Table 1.

Example 2

Prealkylated Ether Slurry Catalyst

The polymerization procedure was the same as for Example 1 except that the catalyst preparation included a cocatalyst. In this procedure, the solid catalyst was slurried in Molex raffinate with the n-butylether as in the control experiment. After a 30 minute slurry time, 28% of the calculated diethylaluminum chloride requirement was placed into the slurry. This mixture was slurried for an additional 15 minutes. The remaining diethylaluminum chloride was placed into the reactor. Prealkylated catalyst was then placed into the polymerization zone as in Example 1. Pertinent data are tabulated in Table 1.

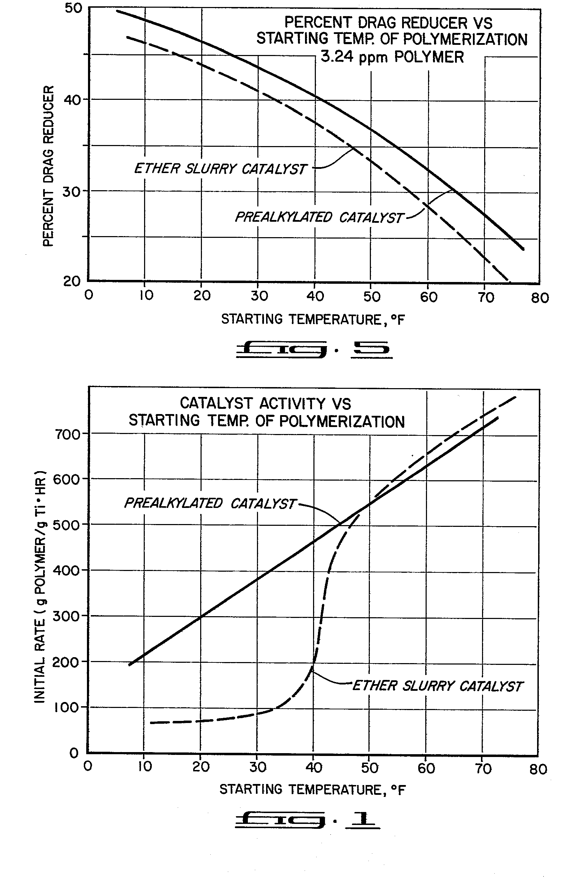

In Table 1, comparison is made between the alkylated catalysts of the present invention and the ether slurry catalyst similar to that of U.S. Patent 4,358,572. Direct comparison is made at various starting temperatures. The activity for the first hour is shown as well as the overall activity and the total polymerization time. Figure 1 shows graphically the effect of temperature on initial polymerization rate for both catalyst systems. Percent drag reduction is determined in a 1-inch pipe loop at a polymer concentration of 3.24 parts per million (ppm).

Table 1

| Starting Temp. | Catalyst | | wt % | Activity* 1st hr | Total Poly Time | Activity* Overall | % Drag Reduction @ 3.24 ppm Polymer |
|---|---|---|---|---|---|---|---|
| | Pre Alk | Ether Slurry | | | | | |
| 10.2°F | | X | 11.01 | 65.3 | 6.88 hrs. | 139.4 | 45.8% |
| 7.0°F | X | | 11.17 | 194.5 | 6.00 | 162.1 | 49.1% |
| 31.0°F | | X | 10.3 | 88.8 | 5.42 | 166.7 | 41.1% |
| 30.0°F | X | | 10.85 | 353.7 | 4.57 | 206.7 | 43.3% |
| 45.4°F | | X | 10.63 | 497.5 | 2.22 | 416.9 | 35.7% |
| 42.4°F | X | | 10.58 | 516.5 | 2.33 | 395.4 | 40.1% |
| 74.4°F | | X | 10.33 | 779.8 | 2.25 | 399.7 | 20.2% |
| 72.8°F | X | | 10.43 | 736.9 | 2.33 | 389.8 | 26.7% |

\* g Polymer/g Ti·hr

Examples 3-6

These examples show polymerizations at a higher olefin to titanium ratio and a lower olefin concentration. Examples 3-6 were terminated after the same polymerization time and therefore the wt% polymer reflects relative activity. Reagent ratios for examples 3 through 6 are; olefin/titanium= 700, n-butyl ether/titanium = 0.56, and DEAC/titanium = 3.36. In examples 4, 5 and 6, portions of the diethylaluminum chloride are placed into the n-butyl ether/catalyst slurry. Example 3 is the control using an ether slurry catalyst as set forth in U.S. Patent 4,358,572. Examples 4 through 6 utilize different ratios of diethylaluminum chloride to titanium in the alkylation step. Example 4 shows an optimum ratio while examples 5 and 6 prealkylation at respectively more than optimum ratios and less than optimum ratios. Pertinent data is set forth in Table 2.

Table 2

| Example | Temp. | Al/Ti Prealkylation | Reactor | Wt.% Polymer |
|---------|-------|---------------------|---------|--------------|
| 3 | 27.2 | – | 3.36 | 6.57 |
| 4 | 28.2 | 0.96 | 2.38 | 6.98 |
| 5 | 31.8 | 1.44 | 1.92 | 6.46 |
| 6 | 24.8 | .50 | 2.86 | ᴎ 2% |

0133214

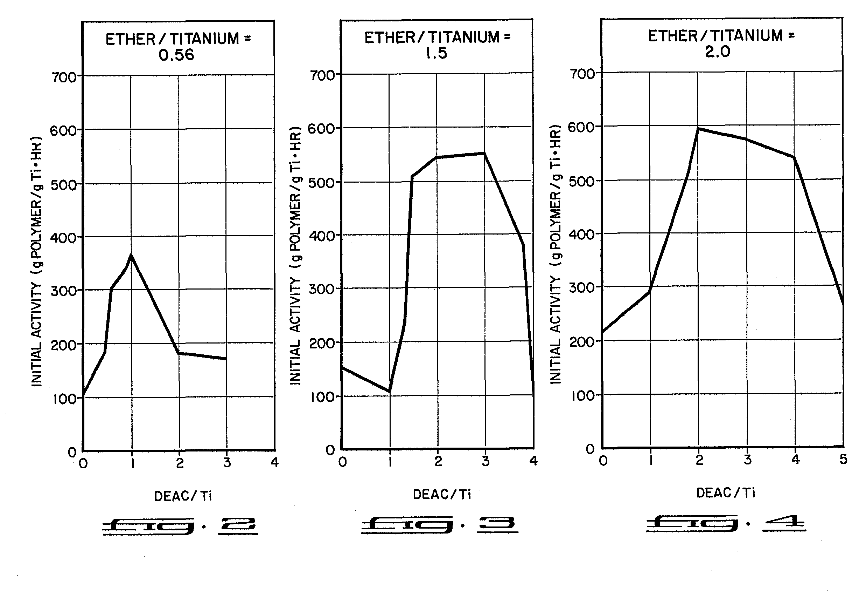

Figures 2,3, and 4 show different ether/titanium ratios and initial activities in grams of polymer per grams of titanium per hour. Figure 2 shows a ratio of 0.56 while Figure 3 shows a ratio of 1.5 and Figure 4 shows a ratio of 2.0. These figures graphically illustrate the critical ratios of alkylating agent to titanium at different ether/titanium ratios. The data used for figures 2, 3 and 4 are set forth in Table 3.

Table 3

Figure 2

| Prealkylation Al/Ti | Ether/Ti | (g Polymer/gTi.hr) |
|---|---|---|
| 0 | 0.56 | 102 |
| 0.40 | | 193 |
| 0.56 | | 304 |
| 0.96 | | 354 |
| 1.00 | | 367 |
| 1.50 | | 289 |
| 1.80 | | 233 |
| 2.00 | | 186 |
| 3.00 | 0.56 | 174 |

Figure 3

| | | |
|---|---|---|
| 0.00 | 1.5 | 149 |
| 1.00 | | 105 |
| 1.30 | | 200 |
| 1.50 | | 509 |
| 2.00 | | 544 |
| 3.00 | | 556 |
| 3.50 | | 391 |
| 3.80 | | 381 |
| 4.00 | 1.5 | 103 |

Figure 4

| | | |
|---|---|---|
| 0.00 | 2.0 | 222 |
| 1.00 | | 295 |
| 1.80 | | 479 |
| 2.00 | | 599 |
| 3.00 | | 582 |
| 4.00 | | 544 |
| 5.00 | 2.0 | 297 |

Comparative drag reduction values were determined for an ether slurry catalyst and for a prealkylated catalyst of the present invention. Catalyst values in both cases were: olefin/titanium = 342, ether/titanium = 0.56, total diethylaluminum chloride/titanium = 4.0 and, in the case of the prealkylated catalyst, prereacted diethylaluminum chloride/titanium = 1.0. Drag reduction of the resulting polymer was measured in diesel fuel pumped through a one inch test loop at 70-75°F. Pressure drop was recorded. Thereafter, 3.24 parts per million (ppm) polymer (prepared using the catalysts described, the procedures exactly alike in all other respects) was injected, and pressure drop again recorded. Percent drag reduction is calculated by the relationship

$$\frac{\Delta P \text{ diesel} - \Delta P \text{ treated}}{\Delta P \text{ diesel}} \times 100,$$

where $\Delta$ P diesel is the base case pressure drop, and $\Delta$ P treated is the pressure drop after the addition of 3.24 ppm polymer.

The results are shown in Figure 5, which shows that higher drag reduction is obtained using the method of the present invention as compared to the ether slurried catalyst of the prior art for any starting temperature when carried out to the same degree of polymerization.

While the prior art teaches that polymerization for such materials should be ceased at a polymer content of 20% by weight or less based on the total reactor content, such is not necessary with the process of the present invention. However, early cessation of polymerization, or in the case of a diluted polymer, total polymerization of olefins, present in the reaction in the presence of an inert diluent wherein total polymer at the close of the reaction is 20% by weight or less will provide higher molecular weight polymer as taught by the prior art.

Once terminated, the resulting mixture will contain ultrahigh molecular weight polyolefin and a hydrocarbon solvent (or unreacted olefins) deactivated catalysts and optionally a small amount of alcohol such as used as the deactivating substance. The entire mixture can then be used as a drag reducing substance. However, the polymer may be precipitated by a variety of techniques if separation is desired. These techniques are well known to those skilled in the art.

Thus prealkylation of the catalyst with an alkylating agent at a critical ratio which is related to the ether to titanium ratio provides a highly improved process for obtaining non-crystalline hydrocarbon soluble high molecular weight drag reducing polymer.

While certain embodiments and details have been shown for the purpose of illustrating this invention, it will be apparent to those skilled in this art that various changes and modifications may be made herein without departing from the spirit or scope of the invention.

We claim:

Claims

1.  A process for the preparation of a non-crystalline, hydrocarbon soluble ultra-high molecular weight drag reducing polymer which comprises the sequential steps:

a)   preparing a transition metal catalyst slurry containing

1)   crystalline titanium halide having the general formula $TiX_n$ wherein n is from 2.5 to 3.0 and X is a halogen,

2)   a hydrocarbon diluent, and

3)   an ether wherein the molar ratio of ether to titanium ranges from about .5 to about 1 titanium to about 10 ether to about 1 titanium, then

b)   contacting the transition metal catalyst slurry with an alkylating agent having at least one available alkyl group, said group containing from 1 to 20 carbon atoms, at a molar ratio of alkylating agent to ether of at least .6 and the molar ratio of alkylating agent to titanium no greater than the ratio of ether to titanium + 2.0 for a time and at a temperature sufficient to activate the transition metal catalyst slurry,

c)   placing the alkylated transition metal catalyst slurry in contact with alpha monoolefinic hydrocarbons containing from about 2 to about 30 carbon atoms at a temperature of 40°F or less to polymerize the olefins and form the non-crystalline hydrocarbon soluble polymers.

2.   A method as described in claim 1 wherein the polymerization temperature is 20°F or less.

3.   A method as described in claim 2 wherein in addition a co-catalyst is present in the alpha monoolefinic hydrocarbons when contacted by the alkylated transition metal catalyst slurry.

4. A method as described in claim 3 wherein the polymer content at cessation of polymerization is no more than 8% by weight of the total reaction mixture.

2/2

FIG.5

FIG.1

FIG.2

FIG.3

FIG.4

**European Patent Office**

**EUROPEAN SEARCH REPORT**

Application number

EP 84 10 7444

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | US-A-4 358 572 (M.P. MACK et al.) <br> * Claims 1-9 * | 1-4 | C 08 F 10/00 <br> C 08 F 4/64 |
| A | US-A-4 154 700 (HEINZ MUELLER-TAMM et al.) <br> * Claim 1; example 2; column 4, line 55 - column 5, line 2 * | 1,3 | |

TECHNICAL FIELDS SEARCHED (Int. Cl. ³)

C 08 F

The present search report has been drawn up for all claims

| Place of search | Date of completion of the search | Examiner |
|---|---|---|
| THE HAGUE | 17-10-1984 | WEBER H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82